# EUROPEAN PATENT APPLICATION

(11) **EP 4 840 824 A1**
(43) Date of publication of application: **18.11.2026**
(21) Application number: 26740141.2
(22) Date of filing: 16.01.2026
(51) Int. Cl.: C01B 32/318, H01M 4/583

(54) **RESIN-BASED SELF-ACTIVATED POROUS CARBON MATERIAL, AND PREPARATION METHOD THEREFOR AND USE THEREOF**

(30) Priority: 07.05.2025 CN 202510583064
(71) Applicant: Hefei Gotion Battery Material Co., Ltd., Hefei, Anhui 230015 (CN)
(72) Inventor: WANG, Zhiquan, Hefei, Anhui 230015 (CN); PENG, Siyao, Hefei, Anhui 230015 (CN); PENG, Youshan, Hefei, Anhui 230015 (CN); LI, Qi, Hefei, Anhui 230015 (CN); PENG, Na, Hefei, Anhui 230015 (CN)
(74) Representative: Kleine, Hubertus
(86) International application number: PCT/CN2026/072969
(87) International publication number: WO 2026/149596

(57) **Abstract**

The present invention relates to the technical field of lithium battery anode materials, and specifically discloses a resin-based self-activating porous carbon material and a preparation method and use thereof. The preparation method comprises the following steps: subjecting a benzenediol monomer, a benzenediol monomer containing a thioether bond, formaldehyde or polyaldehyde, and catalyst A to a polycondensation reaction to obtain a phenolic resin; and carbonizing the phenolic resin to obtain the resin-based self-activating porous carbon material. The present invention utilizes a benzenediol monomer containing a thioether bond to synthesize a phenolic resin, thereby introducing thioether alkane side chains into the phenolic resin. During the carbonization of the phenolic resin, since thioether bonds are highly prone to decompose at a high temperature to generate gas, pores can be created in a phenolic resin skeleton. The prepared resin-based self-activating porous carbon material has a high specific surface area and pore volume. By controlling the structure and the modification ratio of the thioether alkane side chains, controllable design of an internal pore structure of the resin-based porous carbon can be achieved to obtain an ideal pore distribution.

## Description

### Technical Field

The present invention relates to the technical field of lithium battery anode materials, and particularly relates to a resin-based self-activating porous carbon material and a preparation method and use thereof.

### Background

As lithium batteries are the main power batteries in fields such as new energy vehicles and portable electronic devices, the improvement of their energy density has always been a research focus. Silicon materials have a theoretical specific capacity of up to 4200 mAh/g, and are considered the most promising candidates for replacing traditional graphite anode materials. However, silicon materials undergo significant volume expansion during charging and discharging, leading to pulverization and detachment of the electrode material, which seriously affects the cycle life and safety performance of the battery.

Currently, the preparation of a porous silicon-carbon anode material by a vapor deposition method is considered an effective approach to solve the volume expansion problem of silicon anode materials. This method utilizes porous carbon as a carrier of a silicon source, introduces silane gas into pores of the porous carbon under high-temperature conditions, and enables the silicon source to deposit in pore channels of the porous carbon to form a silicon-carbon composite material. The pore structure of the porous carbon provides a buffer space for the expansion of silicon, effectively inhibiting the pulverization of silicon particles. However, in porous carbon materials prepared by existing methods such as physical activation and alkali activation, it is difficult to avoid the generation of ultramicropores (pore diameter < 0.7 nm). Such an ultramicropore structure will affect the insertion and extraction of lithium ions, and reduce the initial Coulombic efficiency and rate performance of the battery. Therefore, developing a resin-based self-activating porous carbon material whose pore structure size can be customized, and avoiding the generation of an ultramicropore structure, is of great significance for improving the electrochemical performance of a porous silicon-carbon anode material.

### SUMMARY

Based on this, an objective of the present invention is to provide a resin-based self-activating porous carbon material and a preparation method and use thereof. By controlling the structure and modification ratio of the thioether alkane side chains, controllable design of the internal pore structure of the resin-based porous carbon can be achieved to obtain an ideal pore distribution and satisfy the specific requirements of silicon-carbon anode materials for the pore structure.

To achieve the above objective, the present invention adopts the following technical solutions:
The present invention first provides a preparation method of a resin-based self-activating porous carbon material, comprising the following steps:
subjecting a benzenediol monomer, a benzenediol monomer containing a thioether bond, formaldehyde or polyaldehyde, and catalyst A to a polycondensation reaction to obtain a phenolic resin;
carbonizing the phenolic resin to obtain the resin-based self-activating porous carbon material.

As a further improvement to the above solution of the present invention, a preparation method of the benzenediol monomer containing a thioether bond is as follows: adding 2,5-dihydroxythiophenol and a halogenated alkane into a solvent, adding catalyst B for reaction, and performing post-treatment to obtain the benzenediol monomer containing a thioether bond.

As a further improvement to the above solution of the present invention, a molar ratio of the 2,5-dihydroxythiophenol to the halogenated alkane is 1:1-1.5, and the mass of the catalyst B is 3%-5% of the total mass of the 2,5-dihydroxythiophenol and the halogenated alkane; and/or the halogenated alkane is at least one of bromohexane, bromobutane, and bromooctane; and/or the catalyst B is at least one of potassium hydroxide, sodium hydroxide, sodium carbonate, sodium bicarbonate, potassium carbonate, and potassium bicarbonate; and/or the solvent is ethanol.

As a further improvement to the above solution of the present invention, the reaction among the 2,5-dihydroxythiophenol, the halogenated alkane, and the catalyst B is performed at 60-70°C for 2-3 h, the post-treatment sequentially comprises filtering, washing, and drying, the washing is performed with deionized water for a plurality of times, and the drying is performed at 80-90°C for 10-14 h.

As a further improvement to the above solution of the present invention, a molar ratio of the benzenediol monomer containing a thioether bond, the benzenediol monomer, and the formaldehyde or polyaldehyde is 1:0.5-2:1.5-3; the mass of the catalyst A is 3%-5% of the total mass of the benzenediol monomer containing a thioether bond, the benzenediol monomer, and the formaldehyde or polyaldehyde; the polyaldehyde is at least one of malondialdehyde, succinaldehyde, glutaraldehyde, 2-hydroxyglutaraldehyde, and malealdehyde; and the catalyst A is at least one of hydrochloric acid and oxalic acid.

As a further improvement to the above solution of the present invention, the polycondensation reaction is performed at 80-90°C for 4-6 h.

As a further improvement to the above solution of the present invention, the carbonization is performed under a protective atmosphere by first heating to 170-180°C and holding the temperature for 2-3 h, then heating to 450-500°C at a heating rate of 1°C/min-10°C/min and holding the temperature for 4-6 h, and then heating to 800-900°C at a heating rate of 1°C/min-10°C/min and holding the temperature for 4-6 h.

The present invention further provides a resin-based self-activating porous carbon material, which is prepared by the preparation method as described above.

The present invention further provides a use of the resin-based self-activating porous carbon material as described above for preparing a lithium battery anode material.

As a further improvement to the above solution of the present invention, preparing the lithium battery anode material comprises the following steps: under a protective atmosphere, first performing silicon deposition on the resin-based self-activating porous carbon material by chemical vapor deposition using a silicon source gas; and then performing carbon coating on the resin-based self-activating porous carbon material by chemical vapor deposition using a carbon source gas to obtain the lithium battery anode material; the silicon source gas is at least one of silane, disilane, dichlorosilane, silicon tetrachloride, dichlorodihydrosilane, and trichlorosilane, the temperature of the silicon deposition is 450-480°C, and the time is 2-4 h; and the carbon source gas is at least one of acetylene, methane, propane, and cyclohexane, the temperature of the carbon coating is 560-580°C, and the time is 2-4 h.

Compared with the prior art, the present invention has the following beneficial effects:
The present invention utilizes the benzenediol monomer containing a thioether bond to synthesize the phenolic resin, thereby introducing a thioether alkane side chain into the phenolic resin; during the carbonization of the phenolic resin, because thioether bonds are highly prone to decompose at high temperatures to generate gas, pores can be created in the phenolic resin skeleton, and the formation of micropores and mesopores is promoted, thereby increasing the specific surface area; compared with traditional physical activation or alkali activation methods, the method of the present invention effectively avoids the problem of the generation of ultramicropore structures inherent in the preparation process of porous carbon materials; at the same time, flexible alkane molecular chains help to relieve structural stress during the carbonization process, reduce pore collapse, and obtain a more uniform pore diameter distribution; the prepared resin-based self-activating porous carbon material has a relatively high specific surface area and pore volume, and the doping of sulfur atoms can form sulfur-carbon bonds or sulfur-oxygen bonds, providing additional adsorption sites and catalytic active sites, and enhancing the application potential of the material in electrochemical energy storage or catalysis.

By controlling the structure and modification ratio of the thioether alkane side chain, the present invention can achieve a controllable design of the internal pore structure of the resin-based porous carbon, obtain an ideal pore distribution, meet the specific requirements of the silicon-carbon anode material for the pore structure, and provide a solution for the customized design of carbon materials having porous structures such as porous carbon and supercapacitor carbon.

The preparation method of the present invention is simple and highly efficient, and does not require complex processes such as compounding of a plurality of carbon sources or multi-step activation and doping; the preparation process is simple, and the cost is relatively low; the prepared resin-based porous carbon material has a relatively high specific surface area and pore volume and can meet the higher requirements of high-energy-density lithium-ion batteries for anode materials.

### BRIEF DESCRIPTION OF THE DRAWINGS

Fig. 1 is an SEM image of the resin-based self-activating porous carbon material prepared in Embodiment 1 of the present invention;
Fig. 2 is an SEM image of the porous carbon material prepared in the comparative example;
Fig. 3 is a comparison graph of the pore diameter/cumulative pore volume of the porous carbon materials prepared in Embodiment 1 of the present invention and the comparative example;
Fig. 4 is a pore diameter distribution diagram of the resin-based self-activating porous carbon material prepared in Embodiment 1 of the present invention; and
Fig. 5 is a pore diameter distribution diagram of the porous carbon material prepared in the comparative example.

### DETAILED DESCRIPTION OF THE EMBODIMENTS

To facilitate understanding of the present invention, the present invention will be described more comprehensively below in conjunction with specific embodiments. However, the present invention can be implemented in many different forms and is not limited to the embodiments described herein. Rather, these embodiments are provided so that the disclosure of the present invention can be understood more thoroughly and comprehensively.

Unless otherwise defined, all technical and scientific terms used herein have the same meaning as commonly understood by those skilled in the art to which the present invention belongs. The terms used herein in the specification of the present invention are only for the purpose of describing specific embodiments, and are not intended to limit the present invention.

### Embodiment 1

This embodiment provides a resin-based self-activating porous carbon material and a preparation method thereof comprises the following steps:
S1. Adding 2,5-dihydroxythiophenol and bromohexane in a molar ratio of 1:1 into an ethanol solvent, and stirring until fully dissolved; then slowly adding sodium hydroxide as a catalyst, wherein the amount of the sodium hydroxide is 5% of the total mass of the 2,5-dihydroxythiophenol and the bromohexane, and raising the temperature to 60°C and reacting for 2 h; after completion of the reaction, washing 3 times with deionized water, filtering, and drying at 80°C for 12 h, obtaining the benzenediol monomer containing a thioether bond, the structural formula of which is:

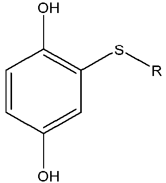

The reaction mechanism of this step is: R-S-Na+R'Br--R-S-R'+NaBr, which is a nucleophilic substitution reaction, and the reaction equation is: 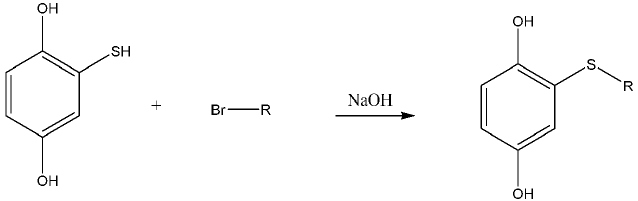
S2. Adding the benzenediol monomer containing a thioether bond prepared in step S1, resorcinol, and formaldehyde in a molar ratio of 1:1:2 into an ethanol solvent, stirring until uniform, adding oxalic acid as a catalyst (wherein the amount of the oxalic acid is 5% of the total mass of the benzenediol monomer containing a thioether bond, the resorcinol, and the formaldehyde), and raising the temperature to 90°C and reacting for 4 h, obtaining a phenolic resin;
S3. Under a nitrogen atmosphere, first raising the temperature of the phenolic resin obtained in step S2 to 180°C and holding the temperature for 2 h, performing curing, then raising the temperature to 500°C at a heating rate of 1°C/min and holding the temperature for 4 h, performing self-activation, and then raising the temperature to 900°C at a heating rate of 5°C/min and performing carbonization for 4 h, obtaining the resin-based self-activating porous carbon material.

### Embodiment 2

This embodiment provides a resin-based self-activating porous carbon material and a preparation method thereof comprises the following steps:
S1. Adding 2,5-dihydroxythiophenol and bromobutane in a molar mass ratio of 1:1.2 into an ethanol solvent, and stirring until fully dissolved; then slowly adding sodium hydroxide as a catalyst, wherein the amount of the sodium hydroxide is 3% of the total mass of the 2,5-dihydroxythiophenol and the bromobutane, and raising the temperature to 70°C and reacting for 3 h; after completion of the reaction, washing 3 times with deionized water, filtering, and drying at 90°C for 10 h, obtaining the benzenediol monomer containing a thioether bond;
S2. Adding the benzenediol monomer containing a thioether bond prepared in step S1, resorcinol, and malondialdehyde in a molar ratio of 1:0.8:1.8 into an ethanol solvent, stirring until uniform, adding hydrochloric acid as a catalyst (wherein the amount of the hydrochloric acid is 3% of the total mass of the benzenediol monomer containing a thioether bond, the resorcinol, and the formaldehyde), and raising the temperature to 85°C and reacting for 5 h, obtaining a phenolic resin;
S3. Under a nitrogen atmosphere, first raising the temperature of the phenolic resin obtained in step S2 to 170°C and holding the temperature for 2 h, performing curing, then raising the temperature to 500°C at a heating rate of 1°C/min and holding the temperature for 4 h, performing self-activation, and then raising the temperature to 850°C at a heating rate of 5°C/min and performing carbonization for 4 h, obtaining the resin-based self-activating porous carbon material.

### Embodiment 3

This embodiment provides a resin-based self-activating porous carbon material, and the preparation method thereof comprises the following steps:
S1. Adding 2,5-dihydroxythiophenol and bromooctane in a molar mass ratio of 1:1.5 into an ethanol solvent, and stirring until fully dissolved; then slowly adding sodium hydroxide as a catalyst, wherein the amount of the sodium hydroxide is 4% of the total mass of the 2,5-dihydroxythiophenol and the bromooctane, and raising the temperature to 65°C and reacting for 2.5 h; after completion of the reaction, washing 3 times with deionized water, filtering, and drying at 85°C for 14 h, obtaining the benzenediol monomer containing a thioether bond;
S2. Adding the benzenediol monomer containing a thioether bond prepared in step S1, resorcinol, and formaldehyde to an ethanol solvent in a molar ratio of 1:0.5:1.5, stirring until uniform, then adding hydrochloric acid as a catalyst (wherein the amount of hydrochloric acid is 4% of the total mass of the benzenediol monomer containing a thioether bond, resorcinol, and formaldehyde), raising the temperature to 80°C and reacting for 6 h, obtaining a phenolic resin;
S3. Under a nitrogen atmosphere, first raising the temperature of the phenolic resin obtained in step S2 to 180°C and holding the temperature for 2 h, performing curing, then raising the temperature to 500°C at a heating rate of 1°C/min and holding the temperature for 4 h, performing self-activation, and then raising the temperature to 800°C at a heating rate of 5°C/min and performing carbonization for 4 h, obtaining the resin-based self-activating porous carbon material.

### Embodiment 4

This embodiment provides a resin-based self-activating porous carbon material and a preparation method thereof comprises the following steps:
S1. Adding 2,5-dihydroxythiophenol and bromooctane in a molar mass ratio of 1:1.5 into an ethanol solvent, and stirring until fully dissolved; then slowly adding sodium hydroxide as a catalyst, wherein the amount of the catalyst is 4% of the total mass of the 2,5-dihydroxythiophenol and the bromooctane, and raising the temperature to 65°C and reacting for 2.5 h; after completion of the reaction, washing 3 times with deionized water, filtering, and drying at 85°C for 14 h, obtaining the benzenediol monomer containing a thioether bond;
S2. Adding the benzenediol monomer containing a thioether bond prepared in step S1, resorcinol, and formaldehyde to an ethanol solvent in a molar ratio of 1:2:3, stirring until uniform, then adding hydrochloric acid as a catalyst (wherein the amount of the hydrochloric acid is 4% of the total mass of the benzenediol monomer containing a thioether bond, the resorcinol, and the formaldehyde), raising the temperature to 80°C and reacting for 6 h, obtaining a phenolic resin;
S3. Under a nitrogen atmosphere, first raising the temperature of the phenolic resin obtained in step S2 to 180°C and holding the temperature for 2 h, performing curing, then raising the temperature to 500°C at a heating rate of 1°C/min and holding the temperature for 4 h, performing self-activation, and then raising the temperature to 800°C at a heating rate of 5°C/min and performing carbonization for 4 h, obtaining the resin-based self-activating porous carbon material.

### Embodiment 5

This embodiment provides a resin-based self-activating porous carbon material and a preparation method thereof comprises the following steps:
S1. Adding 2,5-dihydroxythiophenol and bromohexane in a molar mass ratio of 1:1 into an ethanol solvent, and stirring until fully dissolved; then slowly adding sodium hydroxide as a catalyst, wherein the amount of sodium hydroxide is 5% of the total mass of 2,5-dihydroxythiophenol and bromohexane, and raising the temperature to 60°C and reacting for 2 h; after completion of the reaction, washing 3 times with deionized water, filtering, and drying at 80°C for 12 h, obtaining the benzenediol monomer containing a thioether bond;
S2. Adding the benzenediol monomer containing a thioether bond prepared in step S1, resorcinol, and formaldehyde to an ethanol solvent in a molar ratio of 1:1:2, stirring until uniform, then adding oxalic acid as a catalyst (wherein the amount of oxalic acid is 5% of the total mass of the benzenediol monomer containing a thioether bond, resorcinol, and formaldehyde), raising the temperature to 90°C and reacting for 4 h, obtaining a phenolic resin;
S3. Under a nitrogen atmosphere, first raising the temperature of the phenolic resin obtained in step S2 to 180°C and holding the temperature for 2 h, performing curing, then raising the temperature to 500°C at a heating rate of 5°C/min and holding the temperature for 4 h, performing self-activation, and then raising the temperature to 900°C at a heating rate of 5°C/min and performing carbonization for 4 h, obtaining the resin-based self-activating porous carbon material.

### Comparative Example

This comparative example provides a resin-based porous carbon material and a preparation method thereof comprises the following steps:
S1. Adding resorcinol and oxalic acid in a molar ratio of 1:0.01 to deionized water, heating to 50°C, and then slowly adding a 37% formaldehyde aqueous solution dropwise while stirring at a stirring speed of 200 r/min, completing the dropwise addition in 1 h, wherein a molar ratio of formaldehyde to resorcinol is 1.5:1, obtaining a prepolymer solution;
S2. Slowly adding a 4 wt% potassium hydroxide aqueous solution dropwise to the prepolymer solution while stirring at a stirring speed of 800 r/min, completing the dropwise addition in 1 h; then further adding a 37% formaldehyde aqueous solution dropwise and completing the dropwise addition in 30 min, wherein a molar ratio of formaldehyde to the resorcinol in step S1 is 0.5:1; heating to 70°C and holding the temperature for 8 h, performing a cross-linking reaction and obtaining a gel; placing the obtained gel at 100°C for drying, obtaining a dried material;
S3. Under a nitrogen atmosphere, holding the dried material at 700°C for 3 h, performing carbonization; introducing carbon dioxide and nitrogen (wherein a volume ratio of carbon dioxide to nitrogen is 1:5), raising the temperature to 800°C and holding the temperature for 5 h, performing activation, then cooling to room temperature, and performing grinding, classifying, shaping, and sieving, obtaining a porous carbon material with a particle size D50 of 5-8 µm.

### Test Example

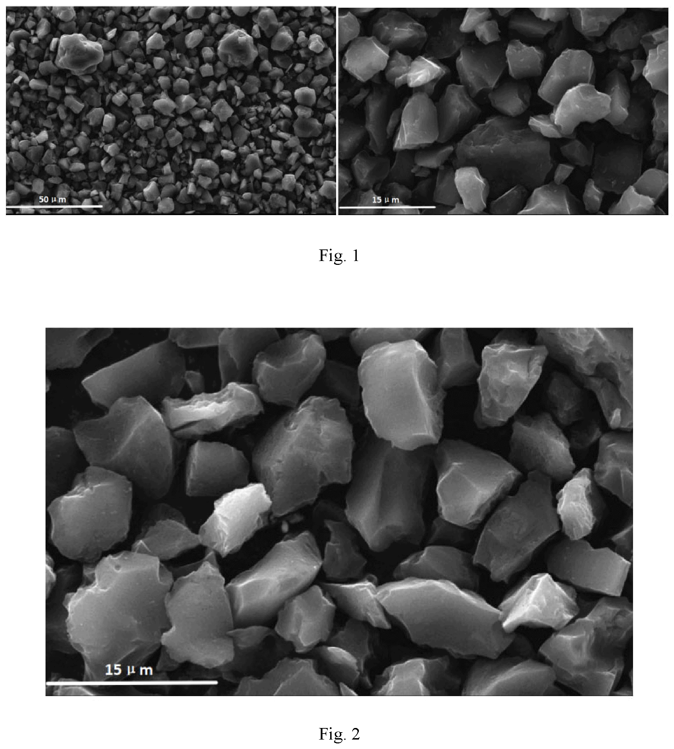

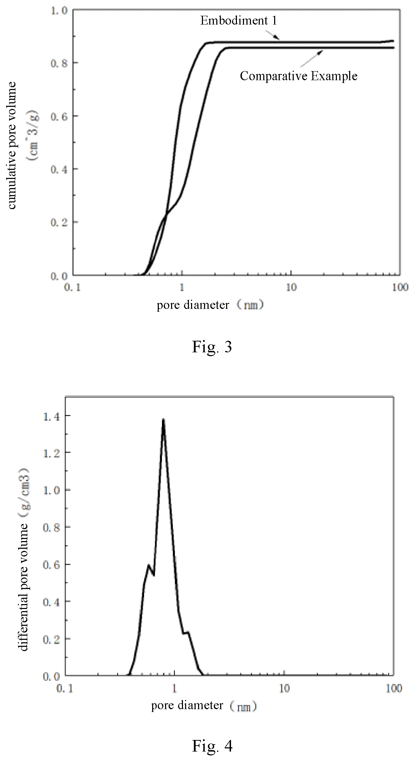

(1) A scanning electron microscope is used to characterize the porous carbon materials prepared in Embodiment 1 and the comparative example to obtain Fig. 1 and Fig. 2. As can be seen from Fig. 1 and Fig. 2, the surface of the porous carbon material prepared in Embodiment 1 has no loose macropores, while the surface of the porous carbon material prepared in the comparative example has obvious loose macropores; this indicates that the method of the present invention can avoid the formation of a macroporous structure on the surface of the porous carbon.
(2) Pore volume, average pore diameter, and specific surface area tests are performed on the porous carbon materials prepared in Embodiments 1-5 and the comparative example: the testing instrument is a V-Sorb X800TP specific surface area and pore diameter analyzer; testing method: the testing gas is nitrogen, and degassing is performed at 300°C for 6 h. The results are shown in Table 1 and Fig. 3-5.

**Table 1 Pore volume, pore diameter, and specific surface area test results**

| | Specific surface area (m²/g) | Pore volume (cm³/g) | Average pore diameter (nm) | Ultramicropore ratio (%) |
|---|---|---|---|---|
| Embodiment 1 | 2068.63 | 0.89 | 1.62 | 0.1 |
| Embodiment 2 | 2105.36 | 0.94 | 1.48 | 0.3 |
| Embodiment 3 | 1921.38 | 0.75 | 1.97 | 0 |
| Embodiment 4 | 1648.75 | 0.51 | 0.89 | 0.4 |
| Embodiment 5 | 1883.11 | 1.02 | 3.75 | 0 |
| Comparative Example | 1989.78 | 0.87 | 1.57 | 1.5 |

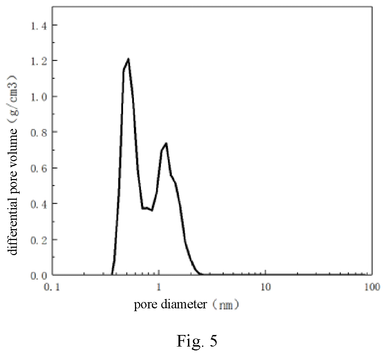

According to the results in Table 1:
Comparing Embodiments 1-3 with the comparative example, it can be seen that by controlling the molar ratio of the benzenediol monomer containing a thioether bond, the pore volume, specific surface area, and pore diameter of the porous carbon material can be regulated, and the ultramicropore ratio of the porous carbon material of Embodiments 1-3 is much lower than that of the comparative example; this indicates that by controlling the structure and modification ratio of the thioether alkane side chain, the present invention can realize a controllable design of an internal pore structure of the resin-based porous carbon, and obtain an ideal pore distribution;
Compared with Embodiment 3, it can be seen that Embodiment 4 can control the pore diameter of the self-activating porous carbon to below 1 nm by reducing the molar ratio of the benzenediol monomer containing a thioether bond; at the same time, compared with the comparative example, it can be found that in the case where Embodiment 4 reduces the average pore diameter of the porous carbon, the ultramicropore ratio can still be effectively controlled;
As can be seen from the test results of Embodiment 1 and Embodiment 5, the heating rate can also be used as one of the means to regulate the pore volume and the pore diameter; an excessively fast heating rate will cause the pore diameter of the self-activating porous carbon to become larger, and this is because the C-O bonds of the functional groups of the phenolic resin and the C-S-C bonds of the thioether groups break in a concentrated manner, and gas escapes simultaneously during activation, thereby causing the pore diameter of the porous carbon to become larger;
As can be seen from Fig. 3, the pore volume ratio of ultramicropores below 0.7 nm of the porous carbon prepared in Embodiment 1 is significantly lower than that of the comparative example; as can be seen from Fig. 4 and Fig. 5, from the comparison of the pore diameter distributions of Embodiment 1 and the comparative example, it can be seen that the pore diameter distribution of the porous carbon prepared by the present invention is narrower and more uniform.

### Application Example

The porous carbon materials prepared in Embodiments 1-5 and the comparative example are respectively used to prepare lithium battery anode materials, and the method is: placing the porous carbon material into fluidized bed vapor deposition equipment, introducing a mixed gas of silane (SiH₄) and argon (the volume ratio of silane to argon is 1:4), and performing vapor deposition at 460°C for 3 h; then flushing the equipment with argon for 30 min, introducing a mixed gas of acetylene and argon (the volume ratio of acetylene to argon is 1:2), and performing vapor deposition at 570°C for 3 h, to obtain the lithium battery anode material.

Then, the prepared lithium battery anode materials are respectively used to prepare CR2025-type coin cells: mixing the lithium battery anode material, a conductive agent (Super-P), a binder (sodium carboxymethyl cellulose (CMC)), and a polyacrylonitrile binder (LA133) at a weight ratio of 80:10:8:2, adding an appropriate amount of ultrapure water to form a slurry, coating the slurry on a copper foil, and performing vacuum drying and rolling to prepare an anode sheet; using a lithium metal sheet as the cathode, using a 1 mol/L LiPF₆ solution (a solvent is formed by mixing dimethyl carbonate (DMC), diethyl carbonate (DEC), and ethylene carbonate (EC) at a mass ratio of 1:1:1) as the electrolyte, using a polypropylene microporous membrane as the separator, and assembling into a CR2025-type coin cell. An electrochemical performance test is performed on the obtained CR2025-type coin cell on a LAND battery testing system: charging and discharging are performed at a constant current of 0.1C under normal temperature conditions, the charge-discharge voltage is limited to 0.005-1.5 V, and the results are shown in Table 2 below.

**Table 2 Electrochemical performance results**

| | Initial discharge specific capacity (mAh/g) | Initial charge specific capacity (mAh/g) | Initial charge-discharge efficiency (%) | 0.8V charge capacity (mAh/g) | 0.8V initial efficiency (%) |
|---|---|---|---|---|---|
| Embodiment 1 | 2072.98 | 1944.45 | 93.80 | 1762.24 | 85.01 |
| Embodiment 2 | 2238.72 | 2085.36 | 93.15 | 1875.60 | 83.78 |
| Embodiment 3 | 1915.52 | 1781.62 | 93.01 | 1632.21 | 85.21 |
| Embodiment 4 | 1472.81 | 1361.02 | 92.41 | 1223.17 | 83.05 |
| Embodiment 5 | 2217.25 | 2023.24 | 91.25 | 1815.26 | 81.87 |
| Comparative Example | 2054.30 | 1908.24 | 92.89 | 1689.45 | 82.24 |

It can be seen from Table 2 that:
Compared with the comparative example, the porous carbon materials provided in Embodiments 1-4 of the present invention exhibit better 0.8V capacity performance and initial efficiency, which shows that the silicon-carbon composite material prepared by the present invention has more excellent electrochemical performance; this indicates that the controllable design of the internal pore structure of the resin-based porous carbon and the doping of sulfur atoms in the present invention are beneficial to improving the electrochemical performance of the silicon-carbon composite material.

The technical features of the above embodiments may be arbitrarily combined. In order to make the description concise, not all possible combinations of the technical features in the above embodiments are described. However, as long as the combinations of these technical features do not conflict, they should all be considered to fall within the scope of this specification.

The above embodiments merely express several implementations of the present invention, and the descriptions thereof are relatively specific and detailed, but they should not therefore be construed as limiting the scope of the patent protection of the invention. It should be noted that for those of ordinary skill in the art, several modifications and improvements may be made without departing from the concept of the present invention, and these all fall within the protection scope of the present invention. Therefore, the protection scope of the patent of the present invention shall be subject to the appended claims.

## Claims

1. A preparation method of a resin-based self-activating porous carbon material, **characterized by** comprising the following steps:
subjecting a benzenediol monomer, a benzenediol monomer containing a thioether bond, formaldehyde or polyaldehyde, and catalyst A to a polycondensation reaction to obtain a phenolic resin containing thioether alkane side chains; wherein a molar ratio of the benzenediol monomer containing a thioether bond, the benzenediol monomer, and the formaldehyde or polyaldehyde is 1:0.5-2:1.5-3;
carbonizing the phenolic resin, wherein thioether bonds of the phenolic resin decompose during the carbonization to generate gas to achieve self-activation and create pores, thereby obtaining the resin-based self-activating porous carbon material; the carbonization is performed under a protective atmosphere by first heating to 170-180°C and holding the temperature for 2-3h, then heating to 450-500°C at a heating rate of 1°C/min-10°C/min and holding the temperature for 4-6h, and then heating to 800-900°C at a heating rate of 1°C/min-10°C/min and holding the temperature for 4-6h.

2. The preparation method of a resin-based self-activating porous carbon material according to claim 1, **characterized in that** the preparation method of the benzenediol monomer containing a thioether bond is: adding 2,5-dihydroxythiophenol and a halogenated alkane into a solvent, adding catalyst B for a reaction, and performing a post-treatment, thereby obtaining the benzenediol monomer containing a thioether bond.

3. The preparation method of a resin-based self-activating porous carbon material according to claim 2, **characterized in that** a molar ratio of the 2,5-dihydroxythiophenol and the halogenated alkane is 1:1-1.5, the mass of the catalyst B is 3%-5% of the total mass of the 2,5-dihydroxythiophenol and the halogenated alkane; and/or, the halogenated alkane is at least one of bromohexane, bromobutane, and bromooctane; and/or, the catalyst B is at least one of potassium hydroxide, sodium hydroxide, sodium carbonate, sodium bicarbonate, potassium carbonate, and potassium bicarbonate; and/or, the solvent is ethanol.

4. The preparation method of a resin-based self-activating porous carbon material according to claim 2, **characterized in that** the reaction among the 2,5-dihydroxythiophenol, the halogenated alkane, and the catalyst B is performed at 60-70°C for 2-3h, the post-treatment sequentially comprises filtering, washing, and drying, the washing is performed a plurality of times with deionized water, and the drying is performed at 80-90°C for 10-14h.

5. The preparation method of a resin-based self-activating porous carbon material according to claim 1, **characterized in that** the mass of the catalyst A is 3%-5% of the total mass of the benzenediol monomer containing a thioether bond, the benzenediol monomer, and formaldehyde or polyaldehyde; the polyaldehyde is at least one of malondialdehyde, succinaldehyde, glutaraldehyde, 2-hydroxyglutaraldehyde, and malealdehyde; and the catalyst A is at least one of hydrochloric acid and oxalic acid.

6. The preparation method of a resin-based self-activating porous carbon material according to claim 1, **characterized in that** the polycondensation reaction is performed at 80-90°C for 4-6h.

7. A resin-based self-activating porous carbon material, **characterized in that** it is prepared by using the preparation method according to any one of claims 1-6.

8. Use of the resin-based self-activating porous carbon material according to claim 7, **characterized in that** it is used for preparing a lithium battery anode material.

9. The use according to claim 8, **characterized in that** preparing the lithium battery anode material comprises the following steps: under a protective atmosphere, first performing silicon deposition on the resin-based self-activating porous carbon material by using a silicon source gas through chemical vapor deposition; then performing carbon coating on the resin-based self-activating porous carbon material by using a carbon source gas through chemical vapor deposition, thereby obtaining the lithium battery anode material; the silicon source gas is at least one of silane, disilane, dichlorosilane, silicon tetrachloride, dichlorodihydrosilane, and trichlorosilane, the temperature of the silicon deposition is 450-480°C, and the time is 2-4h; and the carbon source gas is at least one of acetylene, methane, propane, and cyclohexane, the temperature of the carbon coating is 560-580°C, and the time is 2-4h.
